# EUROPÄISCHE PATENTSCHRIFT

(11) **EP 0 826 896 B1**
(45) Veröffentlichungstag und Bekanntmachung des Hinweises auf die Patenterteilung: **03.11.1999**
(21) Anmeldenummer: 96113803.9
(22) Anmeldetag: 29.08.1996
(51) Int. Cl.: F16D 69/02

(54) **Verfahren zum Herstellen einer Reibbelagmischung für einen Reibbelag, sowie Reibbelag**
Process for manufacturing a mixture for friction lining, and friction lining
Procédé de fabrication d'un mélange pour garniture de friction et garniture de friction

(43) Veröffentlichungstag der Anmeldung: 04.03.1998
(73) Patentinhaber: BBA Friction GmbH, 51375 Leverkusen (DE)
(72) Erfinder: Hogenkamp, Wolfgang Dipl.-Ing., 42855 Remscheid (DE); Ervens, Ludwig Dipl.-Ing, 51519 Odenthal (DE)
(74) Vertreter: Dallmeyer, Georg, Dipl.-Ing.

(56) Entgegenhaltungen:
- EP-A- 0 518 004
- EP-A- 0 552 427
- EP-A- 0 553 404
- EP-A- 0 720 972
- DE-A- 3 905 627
- DE-A- 4 211 446
- DE-A- 4 431 642
- DATABASE WPI Derwent Publications Ltd., London, GB; AN 94-254267 XP002020481 & RU-A-2 005 929 (TIIRTECH ASBESTOS ARTICLES RES INST) , 15.Januar 1994

## Beschreibung

Die Erfindung betrifft ein Verfahren zum Herstellen einer Reibbelagmischung für einen Reibbelag aus Recyclat von asbestfreien Brems- und Kupplungsbelägen sowie einen Reibbelag für Bremsen und Kupplungen nach dem Oberbegriff des Anspruchs 11.

Es besteht ein zunehmendes Interesse, Abfälle zu vermeiden und die darin enthaltenen Rohstoffe einer erneuten Verwertung zuzuführen.

Bei einem aus DE 42 01 893 A bekannten Verfahren zur Aufarbeitung nicht mehr verwendbarer Brems- und Kupplungsbeläge ist vorgesehen, die Beläge vorzusortieren und zu reinigen. Anschließend werden Träger und Belagmasse getrennt. Die auf Maßhaltigkeit und Festigkeitseigenschaften überprüften Träger werden für die Neubelegung vorbereitet, während die Ausschußbeläge und die bei der Aufarbeitung anfallenden Reststoffe in Guß- und Stahlschmelzen als Zuschlagstoff eingesetzt und so entsorgt werden.

Aus DE 43 34 207 C ist ein Verfahren zur Herstellung eines Reibbelags für Kupplungsscheiben bekannt, bei dem der abgenutzte Reibbelag überschliffen wird. Der abgenutzte Reibbelag wird dabei als Trägerschicht verwendet und mit einer neuen Verschleißschicht verklebt. Dabei können dem neuen Reibbelag Zuschlagstoffe hinzugefügt werden, die aus Resten der Reibbelagherstellung bestehen.

Aus EP 0 553 404 A ist es bekannt, die bei der Herstellung von Reibbelägen anfallenden Reststoffe wiederzuverwenden, wobei Filterstaub, Preßgrat, Schleifstaub und Bohrklein unter Zusatz von hitzebeständigen Polymeren zu organisch gebundenen Reibbelägen gepreßt werden.

Aus RU 20 05 929 A ist es bekannt, verbrauchte Reibbeläge zu shreddern und die dabei entstehenden Fragmente in neuen Reibbelägen wiederzuverwenden.

Der Erfindung liegt die Aufgabe zugrunde, die bei der Rücknahme von abgefahrenen und nicht mehr brauchbaren Brems- und Kupplungsbelägen anfallenden Reststoffe möglichst vollständig zur Herstellung neuer Brems- und Kupplungsbeläge zu verwenden.

Zur Lösung dieser Aufgabe dienen die Merkmale des Anspruchs 1 bzw. 11.

Die Erfindung sieht in vorteilhafter Weise vor, eine Reibbelagmischung für einen Reibbelag aus Recyclat von asbestfreien Brems- und Kupplungsbelägen herzustellen, indem Altbeläge von den Belagträgern abgetrennt werden, die Altbeläge und Belagträger sortiert werden, die Altbeläge zu einem Recycling-Granulat zerkleinert werden und indem das Recycling-Granulat klassiert wird. Das klassierte Recycling-Granulat wird mit einem Gewichtsanteil von 10 bis 90 % des Reibbelags im Korngrößenbereich zwischen 0,5 und 2 mm und ca. 10 bis 30 Gew.% des Reibbelages im Korngrößenbereich unter 0,5 mm als Reibbelagmischung verwendet. Die Wiederverwendbarkeit des Reclycling-Granulats ist in hohem Maße von der Korngrößenverteilung des Granulats abhängig. Die angegebene Gewichts- und Korngrößenverteilung ermöglicht es, eine ausreichende Festigkeit und eine gleichmäßige Porenverteilung des überwiegend aus Recyclat hergestellten Reibbelags zu erzeugen.

Ein wesentlicher Vorteil der Erfindung besteht in der Abfallvermeidung, in der Rohstoffersparnis und in der Komponentenreduzierung bei der Herstellung des neuen Reibbelags. Es ist möglich, bis zu 96 % des Reibbelags aus dem Recyclat herzustellen, wobei lediglich Bindemittel dem Recyclat hinzugeführt werden muß, so daß Reibbeläge letztlich aus zwei Komponenten hergestellt werden können.

Vorzugsweise ist vorgesehen, daß das Recycling-Granulat mit einem Anteil von ca. 70 bis 90 Gew.% Granulat im Korngrößenbereich zwischen 0,5 und 2 mm, vorzugsweise zwischen 0,5 und 1,5 mm, und ca. 10 bis 30 Gew.% Granulat im Korngrößenbereich unter 0,5 mm enthält. Bei einer solchen Reibbelagmischung ist ein hoher gewichtsmäßiger Anteil der gröberen Recyclatfraktion erwünscht, um einerseits eine reproduzierbare und gleichförmige Porösität zu erzielen und den Anteil feinkörniger Stäube gering zu halten. Dieser Anteil soll vorzugsweise unter 10 Gew.% liegen.

Nach dem Abtrennen der Altbeläge von den Belagträgern erfolgt ein Zerkleinern der Altbeläge und Sortieren in Form einer Mehrfachklassierung. Dabei werden die Belagträger aussortiert und die zerkleinerten Altbeläge in zwei oder mehrere Fraktionen aufgeteilt.

Vorzugsweise wird eine Fraktion des Recycling-Granulats mit einer Korngröße über ca. 1,5 bis 2 mm einem weiteren Zerkleinerungsprozeß zugeführt, während eine Fraktion des Recycling-Granulats mit einer Korngröße kleiner als ca. 1,5 bis 2 mm den Zerkleinerungsprozeß überspringt und einem Sichtungsvorgang zugeführt wird.

Nach dem Zerkleinerungsprozeß für die Fraktion des Recycling-Granulats über ca. 1,5 bis 2 mm Korngröße erfolgt eine mindestens einstufige Siebung, bei der das Recycling-Granulat mit einer Korngröße über ca. 2 mm erneut dem Zerkleinerungsprozeß zugeführt wird. Gleichzeitig werden Fremdkörper und Zubehörteile wie beispielsweise Federn und Verschleißanzeiger ausgeschieden und entsorgt. Die sich aus der Siebung ergebende Fraktion unter 2 mm wird dann dem Sichtungsvorgang zugeführt, bei dem ebenfalls Fremdkörper ausgeschieden werden und das gewichtsmäßige Verhältnis der Fraktion kleiner 0,5 mm im Verhältnis zur Fraktion zwischen 0,5 und 2 mm eingestellt wird.

Bei dem nachfolgenden Homogenisierungsschritt werden größere Recyclatmengen, z. B. in einem Silo, gesammelt und einem intensiven Mischungsvorgang ausgesetzt, um die Zusammensetzung des Recycling-Granulats in stofflicher Hinsicht zu homogenisieren.

In einem nachfolgenden Mischungsvorgang können dem Recycling-Granulat außer dem Bindemittel die beim Abtrennen und Zerkleinern der Altbeläge, sowie beim Klassieren des Recycling-Granulats und/oder in anderen Reibbelag-Herstellungsprozessen abgesaugten und in Abscheideanlagen gesammelten Stäube zugesetzt werden.

Des weiteren können der Reibbelagmischung Verstärkungsfasern, z. B. Metallfasern mit einem Anteil von ca. 3 bis 30 Gew.% des Reibbelags zugesetzt werden, um die Festigkeit des Reibbelags bei hohen Festigkeitsanforderungen zu erhöhen.

Außerdem können der Reibbelagmischung Reibungsmodifikatoren, z. B. Zinnsulfide hinzugefügt werden.

Der erfindungsgemäße Reibbelag aus einer asbestfreien Reibbelagmischung enthält Füllstoffe, einschließlich anorganischer Fasern, Gleitmittel, z. B. Festschmierstoffe, organische Bestandteile, wie beispielsweise Harze, Kautschuke, organische Fasern, organische Füllstoffe und/oder Metalle in Form von Fasern oder Pulvern. Die Reibbelagmischung wird dabei aus dem Recycling-Granulat mit der angegebenen Korngrößenverteilung gebildet und mit Bindemittel zu einem neuen Reibbelag verpreßt.

Dabei können der Reibbelagmischung Verstärkungsfasern oder andere Reibbelag-Zusatzstoffe hinzugefügt werden.

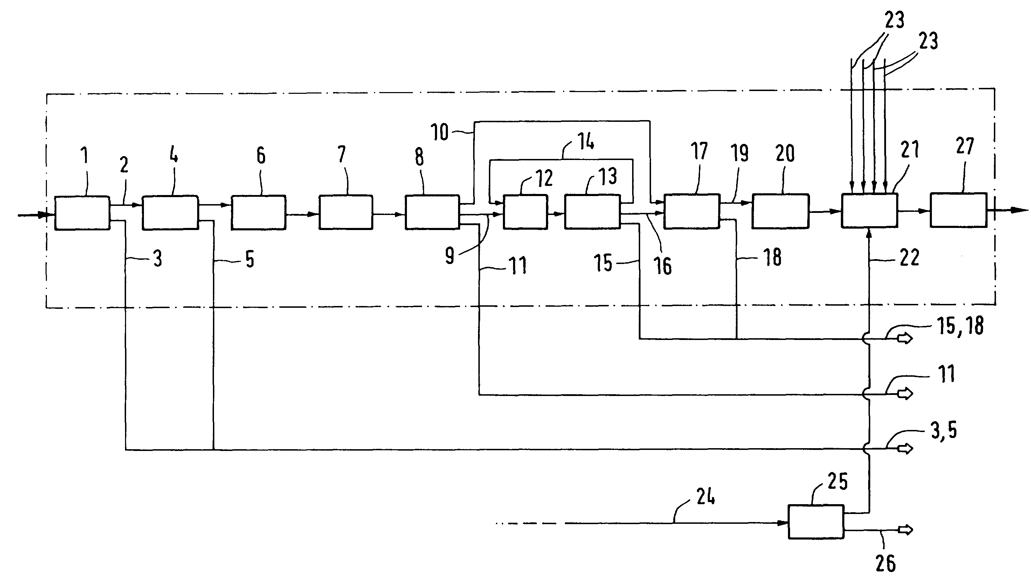

Im folgenden wird ein Ausführungsbeispiel der Erfindung anhand des in der einzigen Figur wiedergegebenen Flußdiagramms erläutert:

Die zu verwertenden Brems- und Kupplungsbeläge werden z. B. in Containern angeliefert und können soweit vorsortiert sein, daß die Container jeweils nur Scheibenbremsbeläge, Trommelbremsbeläge, Kupplungsbeläge oder sonstige Reibbeläge enthalten, wobei weiterhin zwischen Nutzfahrzeugen- und Pkw-Belägen unterschieden werden kann. Die zu verwertenden Beläge werden einer Wiederaufbereitungsstraße zugeführt, deren Stationen in dem Flußdiagramm dargestellt sind. Das Bezugszeichen 1 bezeichnet eine Beschickungsstation, auf der die Container oder sonstige Transportbehältnissen entleert werden und an der eine erste Eingangskontrolle erfolgt. Grobe Fehlwürfe werden hier gegebenenfalls manuell aussortiert und über einen Transportweg 3 entsorgt.

Die vorsortierten Altbeläge werden über einen Transportweg 2 einer Sortierstation 4 zugeführt, in der ein Sortieren maschinell erfolgt. Hierbei werden über einen Transportweg 5 kleinere Fehlwürfe aussortiert und letztlich gemeinsam mit den groben Fehlwürfen entsorgt.

Die vorsortierten Altbeläge gelangen dann zu einer Dosierstation 6, über die die Altbeläge der Station 7 zugeführt werden, in der der verbliebene Reibbelag von dem Belagträger abgetrennt wird. Dabei erfolgt auch eine Zerkleinerung des Reibbelags. In Station 8 werden die getrennten Bestandteile sortiert, wobei die in der Regel metallischen Belagträger über einen Transportweg 11 entsorgt und einer Wiederverwertung zugeführt werden. Das zerkleinerte Belagmaterial über 2 mm Korngröße wird einer Zerkleinerungsstation 12 über einen Transportweg 9 zugeführt, während Belagmaterial mit einer Korngröße kleiner 2 mm über einen Transportweg 10 einer Station 17 zugeführt wird, in der eine Windsichtung erfolgt.

Nach dem weiteren Zerkleinern des Belagmaterials in Station 12 wird dieses in der Station 13 einer zweifachen Siebung unterworfen. Dabei werden über einen Transportweg 15 Zubehörteile, z. B. Federn oder Verschleißanzeiger, ausgeschieden. Das zu einem Recycling-Granulat zerkleinerte Reibmaterial wird entsprechend der Siebung in eine Fraktion mit einer Korngröße über 2 mm und eine Fraktion mit einer Korngröße unter 2 mm unterteilt. Die Fraktion mit einer Korngröße über 2 mm wird über einen Transportweg 14 erneut der Station 12 zugeführt, um einen weiteren Zerkleinerungsprozeß zu durchlaufen. Die Fraktion des Recycling-Granulats mit einer Korngröße unter 2 mm wird über einen Transportweg 16 der Station 17 zugeführt.

Bei der Windsichtung in Station 17 können weitere Fremdkörper abgeschieden werden und über einen Transportweg 18 gemeinsam mit den Zubehörteilen entsorgt werden. Mit Hilfe der Windsichtung kann auch der Anteil der Fraktionen beeinflußt werden und eine gewünschte Korngrößenverteilung für die Reibmaterialmischung zusammengestellt werden.

Das Recycling-Granulat wird von der Station 17 über einen Transportweg 19 einer Homogenisierungsstation 20 zugeführt. In der Homogenisierungsstation 20 werden größere Recycling-Granulatmengen gesammelt und mit Hilfe von Mischungsanlagen hinsichtlich ihrer stofflichen Zusammensetzung derart gemischt, daß eine Homogenisierung des Recycling-Granulats in stofflicher Hinsicht vor der Zufuhr zur Mischstation 21 erfolgt.

In der nachfolgenden Mischstation 21 kann die Reibmaterialmischung aus dem Recycling-Granulat mit einem Bindemittel mit einem Gewichtsanteil von 4 bis 15 Gew.% des Reibbelags sowie - je nach Anforderungen an die Reibbeläge - mit verschiedenen Reibgranulats-Zusatzstoffen vermischt werden, die über die Transportwege 22 und 23 zugeführt werden.

Die einzelnen Stationen sind jeweils staubdicht gekapselt und werden abgesaugt. Die abgesaugten Stäube werden über einen Transportweg 24 einer Filterung 25 zugeführt, wobei die Abluft über eine Leitung 26 abgeführt wird und die Filterstäube über einen Transportweg 22 der Mischstation 21 zugeführt werden können.

Die Reibgranulat-Zusatzstoffe können aus Filterstäuben bestehen, die aus der normalen Bremsbelagproduktion stammen, aber auch aus Verstärkungsfasern, z. B. Carbonfasern, Metallfasern inkl. Stahlwolle und/oder Aramidfasern bestehen. Ein weiterer Granulat-Zusatzstoff besteht aus einem Reibungsmodifikator, z. B. Zinnsulfid.

Nach der Mischung erfolgt eine Chargierung der Reibmaterialmischung jeweils für eine größere Anzahl neu herzustellender Reibbeläge, wobei durch Stichproben und Analyse der Stichproben hinsichtlich ihrer stofflichen Zusammensetzung eine Qualitätseinstufung erfolgt, mit deren Hilfe eine Zuordnung der hergestellten Reibmaterialmischung für bestimmte Anforderungen erfolgen kann.

Das Recycling-Granulat setzt sich vorzugsweise aus 70 bis 90 Gew.% Granulat im Korngrößenbereich zwischen ca. 0,5 und 2 mm und ca. 10 bis 30 Gew.% Granulat im Korngrößenbereich unter 0,5 mm zusammen.

Eine derartige Zusammensetzung des Recycling-Granulats ermöglicht es, in dem neuen Reibbelag eine gleichmäßige, sehr gut reproduzierbare Porösität herzustellen.

Die Durchsatzmengen für den Betrieb der Wiederaufbereitungsstraße betragen ca. 0,5 t bis 7 t pro Stunde.

In der Wiederaufbereitungsstraße können folgende Maschinen eingesetzt werden: zur Trennung der Altbeläge von den Belagträgern wird ein Prallbecher benötigt; die Zerkleinerung der Altbeläge erfolgt mit Hilfe einer Hammermühle; die Trägerplatten werden mit Hilfe eines Nasenlochsiebes ausgesondert. Das Sieben des Granulats mit einer Korngröße über 1,5 mm sowie von Zubehörteilen kann mit einem Stahlnetzsieb mit einer Maschenweite von 1,5 mm erfolgen.

Recycling-Granulat mit einer Korngröße unter 1,5 bis 2 mm kann mit Hilfe einer Taumelsiebmaschine gesiebt werden.

## Patentansprüche

1. Verfahren zum Herstellen einer Reibbelagmischung für einen Reibbelag aus Recyclat von asbestfreien Brems- und Kupplungsbelägen durch
- Abtrennen der Altbeläge von den Belagträgern,
- Sortieren der Altbeläge und Belagträger,
- Zerkleinern der Altbeläge zu einem Recycling-Granulat,
- Klassieren des Recycling-Granulats, und
- Verwenden von Recycling-Granulat als Reibbelagmischung mit einem Anteil von ca. 10-90 Gew.% des Reibbelags im Korngrößenbereich zwischen ca. 0,5 und 2 mm und ca. 10-30 Gew.% des Reibbelags im Korngrößenbereich unter 0,5 mm.

2. Verfahren nach Anspruch 1, gekennzeichnet durch das Verwenden eines Recycling-Granulats als Reibbelagmischung mit ca. 70 bis 90 Gew.% Granulat im Korngrößenbereich zwischen ca. 0,5 und 2 mm, vorzugsweise zwischen ca. 0,5 und 1,5 mm und ca. 10 bis 30 Gew.% Granulat im Korngrößenbereich unter 0,5 mm.

3. Verfahren nach Anspruch 1 oder 2, dadurch gekennzeichnet, daß nach dem Abtrennen der Altbeläge von den Belagträgern ein Zerkleinern der Altbeläge zu Recycling-Granulat und ein Sortieren in Form einer Mehrfachklassierung erfolgt, wobei die Belagträger einer Sammelstelle, z.B. einem Container, zugeführt werden.

4. Verfahren nach Anspruch 3, dadurch gekennzeichnet, daß eine Fraktion mit Recycling-Granulat über ca. 1,5 bis ca. 2 mm Korngröße dem Zerkleinerungsprozeß, eine Fraktion kleiner als ca. 1,5 bis ca. 2 mm dem Sichtungsprozeß zugeführt wird.

5. Verfahren nach einem der Ansprüche 1 bis 4, dadurch gekennzeichnet, daß nach dem Zerkleinerungsprozeß eine mindestens einstufige Siebung erfolgt, bei der das Recycling-Granulat mit einer Korngröße über ca. 2 mm erneut dem Zerkleinerungsprozeß und das Recycling-Granulat mit einer Korngröße unter ca. 2 mm dem Sichtungsprozeß zugeführt wird.

6. Verfahren nach einem der Ansprüche 1 bis 5, dadurch gekennzeichnet, daß nach dem Sichtungsprozeß ein Homogenisierungsprozeß erfolgt.

7. Verfahren nach einem der Ansprüche 1 bis 6, dadurch gekennzeichnet, daß der Reibbelagmischung Bindemittel mit ca. 4-15 Gew.% des Reibbelages in einem Mischprozeß zugesetzt werden.

8. Verfahren nach Anspruch 6, dadurch gekennzeichnet, daß dem Recycling-Granulat die beim Abtrennen und Zerkleinern der Altbeläge, sowie beim Klassieren des Recycling-Granulats abgesaugten und in Abscheideanlagen gesammelten Stäube in dem Mischprozeß zugesetzt werden.

9. Verfahren nach einem der Ansprüche 7 oder 8, dadurch gekennzeichnet, daß der Reibbelagmischung Metallfasern mit einem Anteil von ca. 3 - 30 Gew.% des Reibbelages in dem Mischprozeß zugesetzt werden.

10. Verfahren nach einem der Ansprüche 7 bis 9, dadurch gekennzeichnet, daß der Reibbelagmischung Reibungsmodifikatoren, z.B. Zinnsulfide, zugesetzt werden.

11. Reibbelag für Bremsen und Kupplungen, bestehend aus einer asbestfreien Reibbelagmischung mit
- Füllstoffen,
- Gleitmitteln,
- organischen Bestandteilen, und/oder
- Metallen,
**dadurch gekennzeichnet**,
daß die Reibbelagmischung Recycling-Granulat mit einem Anteil von ca. 10-90 Gew.% im Korngrößenbereich zwischen 0,5 und 2 mm und einem Anteil von ca. 10-30 Gew.% im Korngrößenbereich unter 0,5 mm, sowie ca. 4-15 Gew.% Bindemittel enthält.

12. Reibbelag nach Anspruch 11, dadurch gekennzeichnet, daß die Reibbelagmischung Verstärkungsfasern, z.B. Carbonfasern, Metallfasern inkl. Stahlwolle, und/ oder Aramidfasern, enthält.

13. Reibblag nach einem der Ansprüche 11 oder 12, dadurch gekennzeichnet, daß der Anteil der dem Recycling-Granulat zugesetzten Verstärkungsfasern ca. 3-30 Gew.% des Reibbelages beträgt.

14. Reibbelag nach einem der Ansprüche 11 bis 13, dadurch gekennzeichnet, daß der Reibbelagmischung ein Reibungsmodifikator, z.B. Zinnsulfid, hinzugefügt ist.

15. Reibbelag nach einem der Ansprüche 11 bis 13, dadurch gekennzeichnet, daß das Recycling-Granulat aus ca. 70-90 Gew.% Granulat im Korngrößenbereich zwischen ca. 0,5 und 2 mm, vorzugsweise zwischen ca. 0,5 und 1,5 mm und ca. 10-30 Gew.% Granulat im Korngrößenbereich unter 0,5 mm besteht.

## Claims

1. Process for producing a friction lining mixture for a friction lining made of recycled material from asbestos-free brake and clutch linings, including the following steps:
- removal of the old linings from the lining carriers,
- sorting of the old linings and lining carriers,
- comminution of the old linings to form a recycling granular material,
- classifying of the recycling granular material and
- use of the recycling granular material as friction lining mixture with a fraction of approximately 10 - 90 % by weight of the friction lining in the particle size range between approximately 0.5 and 2 mm and approximately 10 - 30 % by weight of the friction lining in the particle size range below 0.5 mm.

2. Process according to claim 1, characterized by use of a recycling granulate material as friction lining mixture with approximately 70 to 90 % by weight of granular material in the particle size range between approximately 0.5 and 2 mm, preferably between 0.5 and 1.5 mm, and approximately 10 to 30 % by weight of granular material in the particle size range below 0.5 mm.

3. Process according to claim 1 or 2, characterized in that after removal of the old linings from the lining carriers a comminution of the old linings to form a recycling granular material and sorting in the form of multiple classifying take place with the lining carrier being transported to a collection station, e. g. a container.

4. Process according to claim 3, characterized in that a fraction of the recycling granular material with a particle size of above approximately 1.5 to approximately 2 mm is subjected to the comminution process and a fraction with a particle size of below approximately 1.5 to approximately 2 mm is subjected to the sizing process.

5. Process according to one of claims 1 to 4, characterized in that after the comminution process an at least single-step screening process takes place during which the recycling granular material with a particle size of above approximately 2 mm is again subjected to the comminution process and the recycling granular material with a particle size of below approximately 2 mm is subjected to the sizing process.

6. Process according to one of claims 1 to 5, characterized in that after the sizing process a homogeneizing process takes place.

7. Process according to one of claims 1 to 6, characterized in that bonding agent of approximately 4 - 15 % by weight is added to the friction lining mixture during a mixing process.

8. Process according to claim 6, characterized in that the dust extracted during removal and comminution of the old linings and during classifying of the recycling granular material, and collected in separation means is added to the recycling granular material during the mixing process.

9. Process according to one of claims 7 to 8, characterized in that metal fibres with a fraction of approximately 3 - 30 % by weight of the friction lining are added to the friction lining mixture during the mixing process.

10. Process according to one of claims 7 to 9, characterized in that friction modifiers, e. g. tin sulfides, are added to the friction lining mixture.

11. Friction lining for brakes and clutches, comprising an asbestos-free friction lining mixture, with
- filling material,
- lubricants,
- organic constituents, and/or
- metals,
**characterized in that**
the friction lining mixture comprises recycling granular material with a fraction of approximately 10 - 90 % by weight in the particle size range between 0.5 and 2 mm and a fraction of approximately 10 - 30 % by weight in the particle size range below 0.5 mm as well as approximately 4 - 15 % by weight of bonding agent.

12. Friction lining according to claim 11, characterized in that the friction lining mixture comprises reinforcing fibres, such as carbon fibres, metal fibres, including steel wool and/or aramide fibres.

13. Friction lining according to one of claims 11 or 12, characterized in that the fraction of reinforcing fibres added to the friction lining amounts to approximately 3 - 30 % by weight of the friction lining.

14. Friction lining according to one of claims 11 to 13, characterized in that a friction modifier, e. g. tin sulfide, is added to the friction lining mixture.

15. Friction lining according to one of claims 11 to 13, characterized in that the recycling granular material comprises approximately 70 - 90 % by weight of granular material in the particle size range between approximately 0.5 and 2 mm, preferably between approximately 0.5 and 1.5 mm, and approximately 10 - 30 % by weight of granular material in the particle size range below 0.5 mm.

## Revendications

1. Procédé de fabrication d'un mélange de garniture de friction pour garniture de friction à partir d'un produit de recyclage de garnitures de frein et d'embrayage sans amiante consistant à :
- séparer les vieilles garnitures des supports de garnitures,
- trier les vieilles garnitures et les supports de garniture,
- broyer les vieilles garnitures pour obtenir un granulat de recyclage,
- trier le granulat de recyclage, et
- utiliser le granulat de recyclage comme mélange de garniture de friction avec une portion d'environ 10-90% en poids de la garniture de friction dans la plage granulométrique comprise entre environ 0,5 et 2 mm, et d'environ 10-30% en poids de la garniture de friction dans la plage granulométrique inférieure à 0,5 mm.

2. Procédé selon la revendication 1, caractérisé par l'utilisation d'un granulat de recyclage comme mélange de garniture de friction comportant environ 70 à 90% en poids de granulat dans la plage granulométrique comprise entre environ 0,5 et 2 mm, de préférence entre environ 0,5 et 1,5 mm , et environ 10 à 30% en poids de granulat dans la plage granulométrique inférieure à 0,5 mm.

3. Procédé selon la revendication 1 ou 2, caractérisé en ce que, après la séparation des vieilles garnitures des supports de garnitures, on effectue un broyage des vieilles garnitures pour obtenir un granulat de recyclage et un tri sous la forme d'un calibrage multiple, les supports de garnitures étant amenés à une station de collecte, par exemple un conteneur.

4. Procédé selon la revendication 3, caractérisé en ce qu'une fraction comportant du granulat de recyclage d'une grosseur de grain au-dessus d'environ 1,5 à environ 2 mm est amenée au processus de broyage et qu'une fraction avec du granulat plus petit qu'environ 1,5 à environ 2 mm est amenée au processus de tri.

5. Procédé selon l'une des revendications 1 à 4, caractérisé en ce que, après le processus de broyage, a lieu un tamisage à au moins un étage, par lequel le granulat de recyclage ayant une grosseur de grain supérieure à environ 2 mm est à nouveau soumis au processus de broyage et le granulat de recyclage ayant une grosseur de grain inférieure à environ 2 mm est amené au processus de tri.

6. Procédé selon l'une des revendications 1 à 5, caractérisé en ce que, après le processus de tri, un processus d'homogénéisation a lieu.

7. Procédé selon l'une des revendications 1 à 6, caractérisé en ce qu'un liant représentant environ 4-15% en poids de la garniture de friction est ajouté au mélange de garniture de friction dans un processus de mélange.

8. Procédé selon la revendication 6, caractérisé en ce que, lors du processus de mélange, sont ajoutées au granulat de recyclage des poussières aspirées, et collectées dans des installations d'extraction, lors de la séparation et du broyage des vieilles garnitures ainsi que lors du tri des granulats de recyclage.

9. Procédé selon l'une des revendications 7 ou 8, caractérisé en ce que sont ajoutées, au mélange de garniture de friction, des fibres métalliques en une portion d'environ 3-30% en poids de la garniture de friction lors du processus de mélange.

10. Procédé selon l'une des revendications 7 à 9, caractérisé en ce que sont ajoutés, au mélange de garniture de friction, des modificateurs de friction, par exemple du sulfure d'étain.

11. Garniture de friction pour freins et embrayages, composée d'un mélange de garniture de friction sans amiante comportant
- des charges,
- des lubrifiants,
- des constituants organiques, et/ou
- des métaux,
caractérisée en ce que le mélange de garniture de friction contient du granulat de recyclage avec une portion d'environ 10-90% en poids dans la plage granulométrique comprise entre 0,5 et 2 mm et une portion d'environ 10-30% en poids dans la plage granulométrique inférieure à 0,5 mm, ainsi qu'environ 4-15% en poids de liant.

12. Garniture de friction selon la revendication 11, caractérisée en ce que le mélange de garniture de friction contient des fibres de renforcement, par exemple des fibres de carbone, des fibres métalliques incluant la paille de fer, et/ou des fibres d'aramide.

13. Garniture de friction selon l'une des revendications 11 ou 12, caractérisée en ce que la portion de fibres de renforcement ajoutées au granulat de recyclage s'élève à environ 3-30% en poids de la garniture de friction.

14. Garniture de friction selon l'une des revendications 11 à 13, caractérisée en ce qu' un modificateur de friction, par exemple du sulfure d'étain, est ajouté au mélange de garniture de friction.

15. Garniture de friction selon l'une des revendications 11 à 13, caractérisée en ce que le granulat de recyclage se compose d'environ 70-90% en poids de granulat dans la plage granulométrique comprise entre environ 0,5 et 2 mm, de préférence entre environ 0,5 et 1,5mm , et d'environ 10-30% en poids de granulat dans la plage granulométrique inférieure à 0,5 mm.
